# EUROPÄISCHE PATENTSCHRIFT

(11) **EP 0 754 137 B1**
(45) Veröffentlichungstag und Bekanntmachung des Hinweises auf die Patenterteilung: **01.12.1999**
(21) Anmeldenummer: 96900272.4
(22) Anmeldetag: 12.01.1996
(51) Int. Cl.: B60T 8/88

(54) **Verfahren zur Ausblendung von Störsignalen mit Frequenzen im Bereich der Netzfrequenz bei der Ermittlung der Referenzgeschwindigkeit in einem Antiblockierregelsystem**
Method for suppressing interference signals with a frequency about the line frequency in the determination of the reference speed in a ABS system
Procédé de suppression de signaux pertubateurs avec une fréquence proche de la fréquence du réseau électrique dans la détermination de la vitesse de référence d'un système ABS

(30) Priorität: 02.02.1995 DE 19503271
(43) Veröffentlichungstag der Anmeldung: 22.01.1997
(73) Patentinhaber: ROBERT BOSCH GMBH, 70442 Stuttgart (DE)
(72) Erfinder: KOCH-DÜCKER, Heinz-Jürgen, D-74372 Sersheim (DE); DOMINKE, Peter, D-74321 Bietigheim-Bissingen (DE); PFAU, Martin, D-71287 Weissach (DE); SAGER, Frank, Farmington Hills, MI 48331 (US)
(86) Internationale Anmeldenummer: DE9600036
(87) Internationale Veröffentlichungsnummer: WO9623682

(56) Entgegenhaltungen:
- WO-A-91/06457
- WO-A-91/17072
- DE-A- 3 925 889
- DE-A- 4 122 484
- US-A- 4 811 232

## Beschreibung

### Stand der Technik

Bei Fahrzeugen, die mit einem Antiblockierregelsystem ausgerüstet sind, werden üblicherweise vier, in Einzelfällen auch nur drei Drehzahlfühler eingesetzt, die den einzelnen Rädern zugeordnet sind. Die Ausgangssignale dieser Drehzahlfühler weisen im allgemeinen eine Impulsfolge auf. Aus den zeitlichen Abstand der einzelnen Impulse bzw. einzelner Impulsflanken wird die Drehzahl des Rades ermittelt.

Für die Antiblockierregelung wird auch noch die Fahrzeugreferenzgeschwindigkeit benötigt. Diese Fahrzeugreferenzgeschwindigkeit wird üblicherweise aus den vier Radgeschwindigkeiten ermittelt, die genaue Vorgehensweise bei der Berechnung der Fahrzeugreferenzgeschwindigkeit aus einer Raddrehzahl oder aus mehreren Raddrehzahlen ist prinzipiell bekannt und soll hier nicht näher erläutert werden.

Da die wesentlichen Größen, aus denen Ansteuersignale bei einer Antiblockierregelung gebildet werden, von den erwähnten Raddrehzahlsensoren bzw. den zugehörigen Ausgangssignalen gebildet werden, ist es erforderlich, daß eine zuverlässige Überwachung der Funktionsfähigkeit der Sensoren durchgeführt wird. Es wird deshalb beispielsweise in der deutschen Patentanmeldung P 44 05 801.2 (DE-A-4405801) ein Überwachungssystem vorgeschlagen, das bei ABS-Regelsystemen eingesetzt wird und verschiedene Fehlfunktionen der Raddrehzahlsensoren erkennen läßt.

Als problematisch haben sich bei Antiblockierregelsystemen Störsignale erwiesen, die etwa der Netzfrequenz von 50 hz entsprechen. Solche Störsignale liegen in einem Frequenzbereich, der sich bei der ABS-Regelung als kritisch erweist. Elektrische Einstreuungen vom Stromversorgungsnetz können zu einer fehlerhaft ermittelten Radgeschwindigkeit und damit zu einer fälschlischen Anhebung der berechneten Fahrzeugreferenzgeschwindigkeit führen. Es ist daher die Aufgabe der Erfindung, bei Vorhandensein solcher Störsignale diese zu erkennen und in ihrer Auswirkung zu unterdrücken. Dabei soll die Störsignalunterdrückung ohne zusätzliche Bauelemente durchgeführt werden.

### Vorteile der Erfindung

Das erfindungsgemäße Verfahren zur Ausblendung von Störsignalen mit Frequenzen im bereich der Netzfrequenz bei der Ermittlung der Fahrzengreferenzgeschwindigkeit in einem Antiblockierregelsystem mit den Merkmalen des Anspruchs 1 hat den Vorteil, daß Störsignale, die mit einer der üblichen Netzfrequenz entsprechenden Frequenz auftreten, erkannt werden und bei der Auswertung der Drehzahlsensorsignale sowie der aus diesen Signalen gebildeten Fahrzeugreferenzgeschwindigkeit zuverlässig ausgeschlossen werden.

Erzielt werden diese Vorteile, indem die Fahrzeugreferenzgeschwindigkeit ausgehend aus den Raddrehzahlsignalen bei kleinen Fahrzeuggeschwindigkeiten nach einem anderen Verfahren als bei größeren Fahrzeuggeschwindigkeiten erfolgt. Bei Fahrzeuggeschwindigkeiten, die unterhalb einer unkritischen Schwelle liegen, wird ein positiver Angleich der Fahrzeugreferenzgeschwindigkeit verboten, wenn von mindestens einem Raddrehzahlsensor Signale eintreffen, bei denen die Zeitabstände der eintreffenden Flanken ungefähr der Netzfrequenz entsprechen. Es wird also, sobald solche Zeitabstände registriert werden, ein neu ermittelter Fahrzeugreferenzgeschwindigkeitwert nicht verwendet, wenn er höher ist als der vorhergehende Wert.

Weitere vorteilhafte Ausgestaltungen der Erfindung werden durch die in den Unteransprüchen angegebenen Maßnahmen erzielt.

### Zeichnung

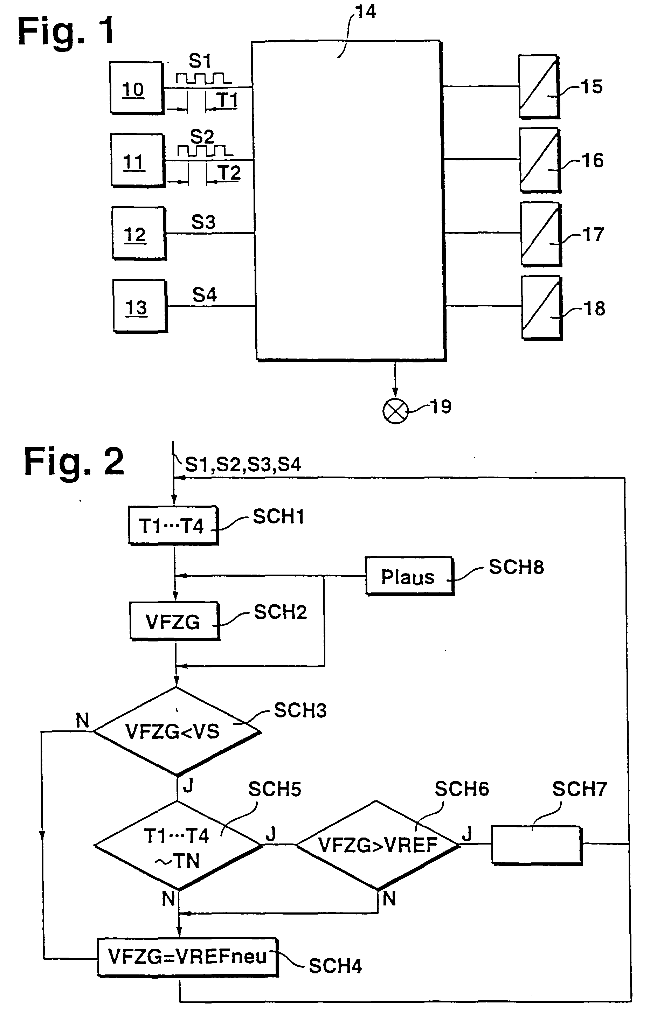

Ein Ausführungsbeispiel der Erfindung ist in der Zeichnung dargestellt und wird in der nachfolgenden Beschreibung näher erläutert. Es zeigt dabei Figur 1 ein Blockschaltbild mit den für das Verständnis der Erfindung wesentlichen Größen eines Antiblockierregelsystems und Figur 2 ein mögliches Verfahren zur Bestimmung der Fahrzeugreferenzgeschwindigkeit.

### Beschreibung des Ausführungsbeispieles

In Figur 1 sind die den einzelnen Rädern zugeordneten Drehzahlsensoren mit 10, 11, 12 und 13 bezeichnet. Diese Drehzahlsensoren tasten Zahnscheiben ab, die sich jeweils synchron mit einem Rad drehen und eine vorgebbare Anzahl von Zähnen aufweisen. Die Drehzahlsensoren liefern die Ausgangssignale S1, S2, S3, S4. Üblicherweise sind diese Signale eine Abfolge von Impulsen. Aus dem zeitlichen Abstand zwischen den Impulsen bzw. zwischen gleichartigen Impulsflanken werden in der Auswerteanordnung 14, üblicherweise einem Mikroprozessor, die für die ABS-Regelung erforderlichen Radgeschwindigkeiten bzw. Raddrehzahlen ermittelt. Die auszuwertenden Zeitabstände sind für die einzelnen Signale S1 bis S4 mit T1 bis T4 bezeichnet.

Die Auswerteanordnung 14 entspricht den üblichen Auswerteschaltungen bzw. Steuergeräten bei Antiblockiersystemen und umfaßt daher eine zentrale Recheneinheit, Speichers, Vergleichsmittel und ggf. weitere logische Elemente.

Die Auswerteeinrichtung 14 wertet die Signale S1 bis S4 aus. Nach Maßgabe der ermittelten Raddrehzahlen steuert die Auswerteeinrichtung 14 die den Radbremsen zugeordneten Drei/Drei-Ventile 15 bis 18. Nach einer Fehlererkennung leitet die Auswerteanordnung 14 die erforderlichen Maßnahmen ein und löst eine Anzeige 19 aus.

Neben den üblichen Auswertungen läuft in der Auswerteeinrichtung 14 auch noch das in Figur 2 dargestellte Verfahren ab.

Bei dem Verfahren nach Figur 2 werden die Signale S1 bis S4 ausgewertet. Dabei werden in der Auswerteeinrichtung jeweils Zeitabstände zwischen aufeinanderfolgende Flanken der einzelnen Signale gemessen. Es wird also in jedem Programmzyklus für jedes Signal S1 bis S4 eine Zeit T1 bis T4 ermittelt. In Figur 2 ist dies mit Schritt SCH1 bezeichnet.

Im Schritt SCH2 wird aus diesen Zeiten T1 bis T4 nach einer bekannten Methode zur Ermittlung einer Referenzgschwindigkeit eine Fahrzeuggeschwindigkeit VFZG ermittelt. Die so ermittelte Fahrzeuggeschwindigkeit VFZG wird im Schritt SCH3 mit einer Schwellwertgeschwindigkeit VS verglichen. Die Geschwindigkeitsschwelle beträgt je nach Zähnezahl etwa 5 km/h oder 7 bis 15 km/h. Bei Geschwindigkeiten, die größer sind, arbeiten herkömmliche Antiblockierregelsysteme üblicherweise problemlos.

Wird im Schritt SCH3 erkannt, daß die ermittelte Fahrzeuggeschwindigkeit VFZG nicht kleiner ist als die Geschwindigkeitsgrenze VS, wird der aktuelle Fahrzeuggeschwindigkeitswert VFZG im Schritt SCH4 als neuer Wert für die Fahrzeugreferenzgeschwindigkeit VREFneu verwendet.

Wird dagegen im Schritt SCH3 erkannt, daß die Fahrzeuggeschwindigkeit VFZG kleiner ist als der Geschwindigkeitsschwellwert VS, wird im Schritt SCH5 geprüft, ob eine der Zeiten T1 bis T4 etwa im Bereich der Zeit TN liegt. Diese Überprüfung im Schritt SCH5 bedeutet, daß überprüft wird, ob an mindestens einem Rad die Zeitabstände der eintreffenden Signalflanken ungefähr der Netzfrequenz, also ungefähr 50 bis 60 Hz, entsprechen. Die Zeit TN beträgt also etwa 0,02 bis 0,167 Sekunden.

Wird im Schritt SCH5 erkannt, daß keine der Zeiten T1 bis T4 im Bereich von TN liegt, wird der im Schritt SCH2 ermittelte Wert für die Fahrzeuggeschwindigkeit VFZG im Schritt SCH4 als neue Fahrzeugreferenzgeschwindigkeit VREF neu verwendet.

Wird dagegen im Schritt SCH5 erkannt, daß wenigstens eine der Zeiten T1 bis T4 im Bereich von TN liegt, wird im Schritt SCH6 geprüft, ob die im Schritt SCH3 ermittelte Fahrzeuggeschwindigkeit VFZG größer ist als die aktuelle Fahrzeugreferenzgeschwindigkeit VREF. Ist die Fahrzeuggeschwindigkeit VFZG nicht größer als die Fahrzeugreferenzgeschwindigkeit, wird die in Schritt SCH3 ermittelte Fahrzeuggeschwindigkeit VFZG als neue Fahrzeugreferenzgeschwindigkeit verwendet. Ergibt dagegen der Vergleich in Schritt SCH6, daß die Fahrzeuggeschwindigkeit VFZG größer ist als die Fahrzeugreferrenzgeschwindigkeit, wird der aktuelle Wert für die Fahrzeuggeschwindigkeit im Schritt SCH7 verworfen und das Programm beginnt erneut mit Schritt SCH1 mit der Auswertung der nächsten Zeiten.

Zusätzlich zu dem bisher beschriebenen Programmablauf kann an wählbaren Stellen eine weitere Plausibilitätsüberprüfung erfolgen. Dies ist mit Schritt SCH8 bezeichnet. Dabei kann überprüft werden, ob die ermittelten Zeiten T1 bis T4 innerhalb vernünftiger Grenzen liegen, ebenso kann überprüft werden, ob die ermittelte Fahrzeuggeschwindigkeit VFZG innerhalb eines sinnvollen Bereiches liegt und es können ggf. als falsch erkannte Werte verworfen werden und Fehleranzeigen 19 ausgelöst werden.

Mit dem in Figur 2 angegebenen Verfahren läßt sich insgesamt einen Ausblendung von Signalstörungen mit Frequenzen im Bereich der Netzfrequenz durchführen. Bei ermittelten Fahrzeuggeschwindigkeiten, die oberhalb einer Schwellwertgeschwindigkeit liegen, werden dabei alle ermittelten Fahrzeuggeschwindigkeiten als Fahrzeugreferenzgeschwindigkeit verwendet. Bei ermittelten Fahrzeuggeschwindigkeiten unterhalb einer Schwellengeschwindigkeit wird dagegen ein positiver Angleich der Fahrzeugreferenzgeschwindigkeit verboten, wenn an mindestens einem Rad die Zeitabstände der eintreffenden Flanken ungefähr der Netzfrequenz entsprechen.

## Patentansprüche

1. Verfahren zur Ausblendung von Störsignalen mit Frequenzen im Bereich der Netzfrequenz bei der Ermittlung der Fahrzeugreferenzgeschwindigkeit (VREF) in einem Antiblockierregelsystem mit Drehzahlfühlern (10, 11, 12, 13) an den Rädern eines Kraftfahrzeuges, bei dem Drehzahlfühlersignale (S1, S2, S3, S4) in einer Auswerteeinrichtung (14) zum Bilden von Steuersignalen herangezogen werden und aus wenigstens einem Drehzahlfühlersignal laufend eine Fahrzeuggeschwindigkeit (VFZG) und aus dieser die Fahrzeugreferenzgeschwindigkeit (VREF) ermittelt wird, dadurch gekennzeichnet, daß ein Geschwindigkeitsschwellwert (VS) vorgesehen ist und die jeweils ermittelte Fahrzeuggeschwindigkeit (VFZG) mit der Schwellwertgeschwindigkeit (VS) verglichen wird und bei ermittelten Fahrzeuggeschwindigkeiten, die größer als die Schwellwertgeschwindigkeit sind, diese gleich als Fahrzeugreferenzgeschwindigkeit (VREF) verwendet werden, wobei bei Fahrzeuggeschwindigkeiten (VFZG), die kleiner als die Schwellwertgeschwindigkeit (VS) sind, überprüft wird, ob die Zeitabstände der eintreffenden Flanken eines Drehzahlfühlersignales für mindestens ein Rad etwa der Netzfrequenz herkömmlicher Stromversorgungssysteme entsprechen und dann weitere Bedingungen erfüllt sein müssen, daß die Fahrzeuggeschwindigkeit (VFZG) als Fahrzeugreferenzgeschwindigkeit (VREF) verwendet wird.

2. Verfahren nach Anspruch 1, dadurch gekennzeichnet, daß eine der weiteren Bedingungen ist, daß die ermittelte Fahrzeuggeschwindigkeit (VFZG) kleiner oder gleich der vorherigen Fahrzeugreferenzgeschwindigkeit (VREF) ist.

3. Verfahren nach Anspruch 1 oder 2, dadurch gekennzeichnet, daß weitere Plausibilitätsüberprüfungen ablaufen, die erkennen lassen, ob die von den Drehzahlsensoren (10, 11, 12, 13) gelieferten Signale (S1, S2, S3, S4) in einem Bereich liegen, der technisch sinnvoll ist.

4. Verfahren nach einem der vorhergehenden Ansprüche, dadurch gekennzeichnet, daß bei erkannter Nichtplausibilität eine Anzeige (19) ausgelöst wird.

## Claims

1. Process for tuning out interference signals with frequencies in the region of the mains frequency during the determination of the vehicle reference speed (VREF) in an antilocking control system with rotational-speed sensors (10, 11, 12, 13) on the wheels of a motor vehicle, in which process rotational-speed sensor signals (S1, S2, S3, S4) are employed in an evaluation device (14) to form control signals and a vehicle speed (VFZG), and from this the vehicle reference speed (VREF), are continuously determined from at least one rotational-speed sensor signal, characterized in that a speed threshold (VS) is provided and the currently determined vehicle speed (VFZG) is compared with the threshold speed (VS) and, in the case of vehicle speeds being determined which are greater than the threshold speed, these are used immediately as the vehicle reference speed (VREF) and in the case of vehicle speeds (VFZG) which are less than the threshold speed (VS), a check is made to decide whether the time intervals of the arriving flanks of a speed sensor signal for at least one wheel correspond approximately to the mains frequency of conventional electricity supply systems and further conditions then have to be satisfied for the vehicle speed (VFZG) to be used as the vehicle reference speed (VREF).

2. Process according to Claim 1, characterized in that one of the further conditions is that the vehicle speed (VFZG) determined is less than or equal to the previous vehicle reference speed (VREF).

3. Process according to Claim 1 or 2, characterized in that further plausibility checks take place which permit recognition of whether the signals (S1, S2, S3, S4) supplied by the rotational-speed sensors (10, 11, 12, 13) are located within a range which is technically sensible.

4. Process according to one of the preceding claims, characterized in that a display (19) is initiated when non-plausibility is recognised.

## Revendications

1. Procédé de suppression de signaux perturbateurs à des fréquences du domaine de la fréquence du réseau lorsqu'on détermine la vitesse de référence du véhicule (VREF) dans un système de régulation antiblocage équipé de capteurs de vitesse de rotation (10, 11, 12, 13) au niveau des roues du véhicule, les signaux (S1, S2, S3, S4) des capteurs de vitesse de rotation étant appliqués à un circuit d'exploitation (14) pour former des signaux de commande et, à partir d'au moins un signal de capteur de vitesse de rotation, on forme en continu une vitesse de véhicule (VFZG) et, à partir de celle-ci, on forme la vitesse de référence du véhicule (VREF),
caractérisé par
- un seuil de vitesse (VS) et la vitesse du véhicule (VFZG), obtenue, est comparée au seuil de vitesse (VS) et pour des vitesses de véhicule, obtenues, qui sont supérieures à la vitesse seuil, on utilise celles-ci comme vitesses de référence de véhicule (VREF), et pour des vitesses de véhicule (VFZG) inférieures à la vitesse seuil (VS), on vérifie si les intervalles de temps des flans d'entrée d'un signal de capteur de vitesse de rotation d'au moins une roue correspondent sensiblement à la fréquence de réseau de systèmes d'alimentation électriques usuels, et alors d'autres conditions doivent être satisfaites pour que la vitesse de véhicule (VFZG) puisse être utilisée comme vitesse de référence de véhicule (VREF).

2. Procédé selon la revendication 1,
caractérisé en ce qu'
une autre condition est que la vitesse obtenue (VFZG) du véhicule soit inférieure ou égale à la vitesse de référence de véhicule précédente (VFZG).

3. Procédé selon la revendication 1 ou 2,
caractérisé en ce qu'
on exécute d'autres contrôles de plausibilité qui permettent de savoir si les signaux (S1, S2, S3, S4), fournis par les capteurs de vitesse de rotation (10, 11, 12, 13), se situent dans une plage techniquement logique.

4. Procédé selon l'une quelconque des revendications précédentes,
caractérisé en ce qu'
en cas de non plausibilité reconnue, on déclenche un affichage (19).
